# EUROPEAN PATENT APPLICATION

(11) **EP 4 755 600 A1**
(43) Date of publication of application: **10.06.2026**
(21) Application number: 25204133.0
(22) Date of filing: 23.09.2025
(51) Int. Cl.: B26B 29/06, A47J 47/00

(54) **FUNCTIONAL CUTTING BOARD CONTAINING NATURAL EXTRACTS AND METHOD FOR MANUFACTURING THE SAME**

(30) Priority: 03.12.2024 KR 20240177395
(71) Applicant: Jinhan Ind.Co.,Ltd., Incheon (KR)
(72) Inventor: Park, Hong Kyoo, Seoul (KR)
(74) Representative: AWA Denmark A/S

(57) **Abstract**

The present invention relates to a functional cutting board containing natural extracts. The functional cutting board comprises a substrate layer including TPU (thermoplastic polyurethane) and a functional substance contained within the substrate layer, wherein the functional substance includes a natural extract containing vitamins.

## Description

### [Technical Field]

The present invention relates to a functional cutting board containing natural extracts and a method for manufacturing the same, and more particularly, to a functional cutting board containing capsules that include grapefruit seed extract as a natural extract containing vitamins, and to a method for manufacturing the same.

### [Background Art]

A cutting board is used for processing food ingredients during food preparation. Conventionally, it has been common to manufacture cutting boards from plastic materials, primarily using wood or synthetic resins, taking into account the intended use and functional characteristics of cutting boards.

Meanwhile, there has arisen a need for a functional cutting board that possesses antibacterial, antifungal, and sterilizing functions against bacteria proliferating from residual food materials remaining on the cutting board surface, and that can prevent deterioration of these antibacterial, antifungal, and sterilizing functions due to coating layer damage caused by scratches from knives.

### [Disclosure]

### [Technical Problem]

The present invention has been conceived to solve the aforementioned problems, and aims to provide a functional cutting board containing natural extracts with vitamins, which simultaneously offers functionality, hygiene, and health benefits, while also providing excellent economic efficiency and practicality in terms of manufacturing and maintenance.

The problems of the present invention are not limited to those mentioned above, and other problems not mentioned will be clearly understood by those skilled in the art from the following description.

### [Technical Solution]

One aspect of the present invention provides functional cutting board comprises: a substrate layer including TPU (thermoplastic polyurethane); and a functional substance contained within the substrate layer, wherein the functional substance includes a natural extract containing vitamins.

The natural extract includes grapefruit seed extract and grapefruit peel extract.

The substrate layer contains a plurality of capsules, each of which contains the grapefruit seed extract and the grapefruit peel extract. The grapefruit seed extract consists of vitamin C, naringin, hesperidin, and beta-carotene, while the grapefruit peel extract consists of naringin, apigenin, and pectin.

Each of the plurality of capsules has a core-shell structure, wherein the core-shell structure comprises: a core containing the grapefruit seed extract and the grapefruit peel extract; and a shell containing a polymer resin. The weight ratio of the grapefruit seed extract to the grapefruit peel extract in the core is from 10:1 to 10:2.

### [Advantageous Effects]

According to an embodiment of the present invention, by encapsulating and protecting natural extracts such as grapefruit seed extract containing vitamins in a core-shell structure, it is possible to prevent the loss of active ingredients (e.g., vitamins) during the manufacturing process and storage. As the natural extracts are contained within the substrate layer, their functional properties can be maintained without peeling of a coating layer.

Additionally, when the shell layer is damaged, the natural extract is released, thereby exhibiting the antibacterial, antifungal, antiviral, and antioxidant effects of the grapefruit seed extract. This enables the delivery of antibacterial and antioxidant components to food ingredients, contributing to health, and allows for easy sanitation management by effectively eliminating bacteria that may be generated from residual food materials on the cutting board.

Furthermore, due to the natural characteristics of the grapefruit seed extract, toxicity and environmental pollution concerns are avoided, providing an eco-friendly functional cutting board.

The effects according to the technical spirit of the present disclosure are not limited to those described above, and other effects not mentioned will be clearly understood by those skilled in the art from the following description.

### [Description of Drawings]

Fig. 1 is a schematic cross-sectional view of a functional cutting board containing natural extracts according to one embodiment of the present invention.
Fig. 2 is a schematic cross-sectional view of a functional cutting board containing natural extracts according to another embodiment of the present invention.

### [Modes of the Invention]

Hereinafter, preferred embodiments of the present disclosure will be described in detail with reference to the accompanying drawings. The advantages and features of the present disclosure, and methods of achieving them, will become apparent from the embodiments described in detail below together with the accompanying drawings. However, the technical spirit of the present disclosure is not limited to the embodiments below and may be implemented in various different forms. The embodiments below are provided only to fully describe the technical spirit of the present disclosure and to fully inform those skilled in the art of the scope of the present disclosure, and the technical spirit of the present disclosure is defined only by the scope of the claims.

When reference numerals are added to the components of each drawing, it should be noted that, for identical components, the same numerals are used as much as possible even if they are shown in different drawings. In addition, in describing the present disclosure, if it is determined that detailed descriptions of related known components or functions may obscure the gist of the present disclosure, such detailed descriptions will be omitted.

Unless otherwise defined, all terms used in the present specification (including technical and scientific terms) may be used in the meaning commonly understood by those skilled in the technical field to which the present disclosure pertains. Terms defined in generally used dictionaries should be interpreted as having the meanings consistent with their context in the relevant technical field, and not interpreted in an idealized or overly formal sense unless explicitly defined otherwise. The terms used in the present specification are for describing embodiments only and are not intended to limit the present disclosure. In the present specification, the singular form also includes the plural form unless otherwise specified.

In addition, in describing the components of the present disclosure, terms such as first, second, A, B, (a), and (b) may be used. These terms are merely to distinguish one component from another, and do not limit the nature, order, or sequence of the components. When a component is described as being "connected," "coupled," or "joined" to another component, it may be directly connected or joined to the other component, but it should be understood that another component may also be "connected," "coupled," or "joined" between the components.

The terms "comprises" and/or "comprising" used in the present disclosure do not exclude the presence or addition of one or more other components, steps, operations, and/or elements besides those stated.

Before describing the present disclosure in detail, some terms used in the embodiments below will be clarified.

Hereinafter, various embodiments of the present disclosure will be described in detail according to the accompanying drawings.

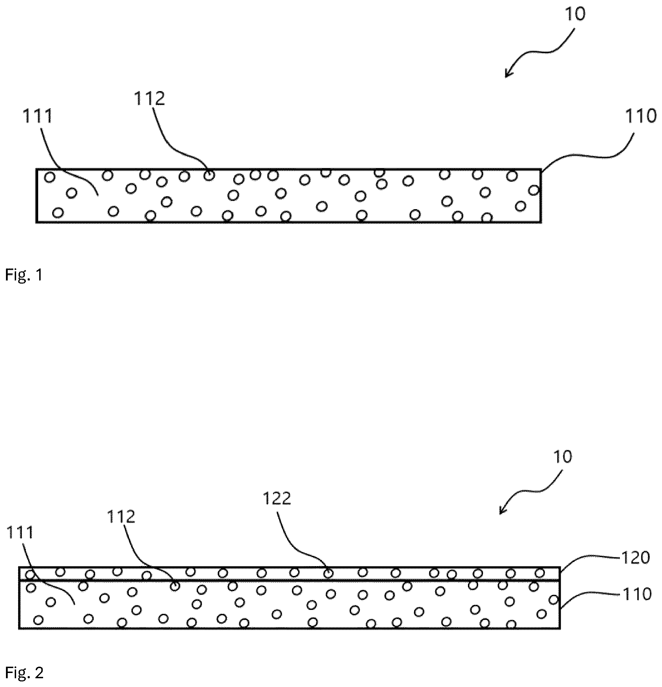

FIG. 1 is a schematic cross-sectional view of a functional cutting board containing natural extracts according to one embodiment of the present invention. FIG. 2 is a schematic cross-sectional view of a functional cutting board containing natural extracts according to another embodiment of the present invention.

Referring to FIG. 1, the functional cutting board (10) comprises a substrate layer (110) containing thermoplastic polyurethane (TPU, 111) that performs the main cutting board function, and a functional substance (112) contained in the substrate layer (110), wherein the functional substance (112) includes a natural extract containing vitamins.

The thermoplastic polyurethane (TPU, 111) serves as the base material of the functional cutting board (10) of the present invention. The TPU (111) has excellent mechanical strength and elasticity and has heat resistance above 100 °C, so the functional cutting board (10) is not damaged even when washed at high temperature in a dishwasher. The TPU may be any TPU commonly used in the relevant field without particular limitation. The TPU may also be formed by molding pellet or granule-type raw materials.

The substrate layer (110) may contain the functional substance (112) including a natural extract containing vitamins. In some embodiments, the natural extract may further include at least one of an antibacterial substance, an antifungal substance, an antiviral substance, or an antioxidant substance.

The natural extract may include grapefruit seed extract (GSE) and grapefruit peel extract.

The grapefruit seed extract may be composed of vitamin C, naringin, hesperidin, and beta-carotene, and the grapefruit peel extract may be composed of naringin, apigenin, and pectin.

In addition, the grapefruit seed extract and/or grapefruit peel extract may further include vitamins other than vitamin C, antibacterial substances, antifungal substances, antiviral substances, or antioxidant substances.

Grapefruit seed extract refers to an extract obtained from grapefruit seeds by extracting with water, ethanol, or glycerin. Such grapefruit seed extract has strong antibacterial, antifungal, antioxidant, and antiviral effects, is effective against bacteria such as E. coli, Staphylococcus aureus, Candida albicans, and Salmonella, has antifungal effects against fungi such as Candida, and is effective in antiviral activity by reducing the replication of certain types of viruses.

Moreover, grapefruit seed extract is a non-toxic, non-metallic, non-corrosive, odorless natural organic mixture with high heat stability, and does not cause environmental pollution. It also exerts strong bactericidal, virucidal, and fungicidal actions against putrefactive or pathogenic microorganisms such as bacteria, fungi, and viruses, and has excellent antioxidant properties that prevent rancidity of fats and suppress the occurrence of rancid odors, thereby providing excellent antibacterial, antifungal, antioxidant, and antiviral effects on food residues remaining on the cutting board.

Grapefruit seed extract, while having such effects, is completely decomposed when absorbed into the body, so there is no risk of toxicity due to accumulation, and it is a natural extract very safe for humans and animals.

Grapefruit seed extract may include vitamin C and vitamin E. In addition, it may contain amino acids, fatty acids, tocopherols, and polyphenol components, and as an antioxidant compound, may include polyphenols, vitamin C, vitamin E, and bioflavonoids. Accordingly, even when the grapefruit seed extract containing antioxidant compounds that improve immunity is ingested by the human body, it can provide beneficial components, thereby offering not only antibacterial, antifungal, and antiviral effects but also health benefits.

Meanwhile, grapefruit peel extract is obtained from grapefruit peel and is known to have anti-inflammatory and anticancer effects such as suppressing inflammation and inhibiting cancer cells, and to provide health benefits such as promoting digestion by aiding the growth of beneficial intestinal bacteria when ingested.

In this specification, the term "grapefruit peel" refers to the inner peel of the grapefruit filled between the pulp and the hard outer peel. Although the outer peel also contains functional components such as dietary fiber, it is excluded to prevent potential residual pesticides even after thorough washing.

In some embodiments, the functional substance (112) may be contained in the substrate layer (110) in the form of capsules. Specifically, the substrate layer (110) may include a plurality of capsules, and each of the plurality of capsules may contain the natural extract.

In some embodiments, each of the plurality of capsules may have a core-shell structure, wherein the core-shell structure may include a core containing the natural extract and a shell containing a polymer resin.

The grapefruit seed extract included in the core may be composed of vitamin C, naringin, hesperidin, and beta-carotene, and the grapefruit peel extract may be composed of naringin, apigenin, and pectin.

The polymer resin included in the shell layer may include at least one of alginate, gelatin, and chitosan.

In some embodiments, the capsules having a core-shell structure may be manufactured by preparing grapefruit seed extract and grapefruit peel extract, and forming a core by cold thermo-compression of the prepared grapefruit seed extract and grapefruit peel extract; however, the manufacturing method is not limited thereto. In other embodiments, the capsules having a core-shell structure may be manufactured by mixing the grapefruit seed extract and grapefruit peel extract with a polymer resin composition forming the shell layer. Without limitation, the core-shell structure may have a diameter of 10 µm or less, and the thickness of the shell portion may be 100 nm or less.

According to the present invention, since the natural extract adopts a core-shell structure, the core contains the natural extract (grapefruit seed extract) and is protected by the shell layer, thereby preventing the loss of the natural extract (grapefruit seed extract) during the manufacturing process of the functional cutting board (10) or during storage thereof. However, when the natural extract needs to be released, it can be easily discharged by damage to the shell layer.

In addition, when adopting the core-shell structure, the weight ratio of the grapefruit seed extract to the grapefruit peel extract contained in the core is preferably 10:1 to 10:2 from the viewpoint of the yield of the encapsulation process.

The functional cutting board (10) according to the present invention includes a natural extract containing grapefruit seed extract having antibacterial, antifungal, antiviral, and antioxidant effects, not in a structure in which the natural extract is coated on the substrate layer (110) performing the main function of the cutting board (10), but contained inside the substrate layer (110), thereby preventing deterioration of the above functions (antibacterial, antifungal, antiviral, antioxidant) due to peeling of the coating layer by use of the functional cutting board (10).

Further, when the natural extract is mixed with TPU to manufacture the substrate layer (110), the natural extract itself is not directly mixed but adopts a core-shell structure, wherein the natural extract is contained in the core and protected by a shell layer including a polymer resin, thereby preventing the loss of the natural extract (grapefruit seed extract) due to the manufacturing environment or manufacturing conditions during the production of the cutting board.

Moreover, as described later, by manufacturing the functional cutting board (10) so that the capsules having a core-shell structure containing the natural extract (grapefruit seed extract) remain on the surface of the substrate layer (110) during the manufacturing process, when the functional cutting board (10) is used, the shell layer of the core-shell structure is damaged by a knife, causing the capsules to break and release the natural extract (grapefruit seed extract). Accordingly, during food preparation, part of the natural extract (grapefruit seed extract) contained in the capsules of the core-shell structure can be released and mixed or transferred to the food ingredient. Therefore, the food ingredient prepared using the functional cutting board (10) may have the natural extract (grapefruit seed extract) containing vitamins adhered thereto, thereby providing health benefits to the person consuming the food.

In addition, during use of the functional cutting board (10), when the shell layer of the core-shell structure is damaged by a knife, the capsules are broken, releasing the natural extract (grapefruit seed extract), which can efficiently eliminate viruses, bacteria, fungi, etc., generated by food residues remaining on the functional cutting board (10). Therefore, the functional cutting board (10) can be easily maintained, and additional equipment for drying and sterilizing the functional cutting board (10) is unnecessary, making it economical.

Hereinafter, a method for manufacturing a functional cutting board containing a natural extract according to one embodiment of the present invention will be described.

First, capsules having a core-shell structure containing the natural extract (112) are manufactured (S100).

The step of manufacturing the capsules having a core-shell structure containing the natural extract (112) may include: a step of preparing grapefruit seed extract; a step of thermo-compressing the prepared grapefruit seed extract to form a core; and a step of forming a shell layer including a polymer resin on the core containing the thermo-compressed grapefruit seed extract.

Specifically, the step of manufacturing the natural extract may include extracting substances containing vitamin C, naringin, hesperidin, and beta-carotene from grapefruit seeds, and extracting substances containing naringin, apigenin, and pectin from grapefruit peel.

For example, a method for extracting grapefruit seed/grapefruit peel extract from grapefruit may include adding 99.9% ethanol to dried and pulverized grapefruit seeds/inner peel, extracting twice at room temperature for 24 hours, filtering the extract, and vacuum concentrating the filtrate to obtain grapefruit seed/grapefruit peel ethanol extract. As another method, dried and pulverized grapefruit seeds/inner peel may be mixed with distilled water, hot-water extracted twice at 90-95 °C for 6 hours, and the extract centrifuged at 10,000 × g for 30 minutes to obtain a supernatant as grapefruit seed/grapefruit peel hot-water extract.

Next, the prepared grapefruit seed extract and grapefruit peel extract may be thermo-compressed to form a core. Since vitamins contained in the natural extract may be decomposed at high temperatures, the thermo-compression may be carried out at a low temperature of 40-70 °C. By performing thermo-compression within the above temperature range, the natural components contained in the natural extract included in the core may not be decomposed. The thermo-compression process may also be performed using a heat stabilizing additive to prevent decomposition of natural substances (e.g., vitamins).

Subsequently, in the step of forming a shell layer including a polymer resin on the core containing the thermo-compressed natural extract, the polymer resin may be dissolved in water to prepare a shell layer composition, and the shell layer composition and the natural extract may be mixed, emulsified through high-speed stirring (500-2000 rpm) or ultrasonic treatment to disperse the natural extract in the form of small droplets, so that the core material containing the natural extract is uniformly distributed in the shell layer composition. Then, the mixture may be cooled to 10-15 °C, and the pH adjusted to manufacture capsules having a core-shell structure.

In the step of manufacturing the core-shell structure, the shell layer composition and the natural extract may be mixed in respective amounts of 10-30 wt% and 70-90 wt%, preferably 20-30 wt% and 70-80 wt%.

Next, a substrate layer (110) including TPU (111) and the capsules having a core-shell structure containing the natural extract (112) is formed (S200).

Specifically, the substrate layer (110) may be formed using a composition prepared by mixing TPU (111) and capsules having a core-shell structure containing the natural extract (112) including grapefruit seed extract.

In some embodiments, the substrate layer (110) may be manufactured using a substrate layer composition containing 75 wt% TPU, 23 wt% capsules having a core-shell structure containing the natural extract (112), and 2 wt% dispersant. In some embodiments, the dispersant may be a mixture of zinc stearate and stearic acid in a 1:1 ratio.

In some embodiments, the materials may be placed in a mixer and stirred for 40 minutes so that the materials are evenly mixed with each other, then dried for 3 hours at 80 °C, and the dried composition injected into a prepared mold to manufacture the substrate layer (110).

Since the capsules having a core-shell structure are contained in the substrate layer composition together with TPU, the capsules containing the natural extract may be contained inside the substrate layer (110). Accordingly, after the functional cutting board (10) is completed, loss of the natural extract inside the functional cutting board (10) can be prevented during distribution.

In other embodiments, the capsules having a core-shell structure may be blended into the substrate layer composition, and while the blended substrate layer composition is applied to a mold, the capsules having a core-shell structure may be additionally added (sprayed) onto the substrate layer composition through a coater or sprayer during the drying process of the applied substrate layer composition. The capsules having a core-shell structure sprayed onto the substrate layer composition may be the same as those blended into the substrate layer composition. By additionally spraying the capsules having a core-shell structure onto the applied substrate layer composition, the capsules are distributed on the surface during drying, so that after drying, the capsules having a core-shell structure can remain evenly on the surface of the substrate layer (110). Accordingly, during use of the functional cutting board (10), the amount and uniform distribution of the capsules having a core-shell structure remaining on the surface is increased, thereby making it easier to release antioxidant substances, antibacterial substances, antifungal substances, or antiviral substances by a knife, thus enhancing the antibacterial function of the functional cutting board (10).

FIG. 2 is a schematic cross-sectional view of a functional cutting board containing natural extracts according to another embodiment of the present invention.

FIG. 2 shows a schematic cross-sectional view of the functional cutting board (10) according to another embodiment of the present invention, and for convenience of explanation, the description of the same functions as the functional cutting board (10) of FIG. 1 will be omitted and only the differences will be described.

Referring to FIG. 2, the functional cutting board (10) according to another embodiment of the present invention further includes a coating layer (120) disposed on the surface of the substrate layer (110).

The coating layer (120) may include capsules having a core-shell structure, and the capsules having a core-shell structure may be the same as those contained in the substrate layer (110). By additionally providing a coating layer (120) containing capsules having a core-shell structure including a natural extract (grapefruit seed extract) on the substrate layer (110), the grapefruit seed extract can be more easily released from the capsules having a core-shell structure when the functional cutting board (10) is used, so that antioxidant substances (polyphenols, vitamin C, vitamin E, bioflavonoids) contained in the grapefruit seed extract can be more easily transferred to food ingredients.

The coating layer (120) may be manufactured by spraying a coating composition containing capsules having a core-shell structure including grapefruit seed extract onto the surface or upper surface of the substrate layer (110) after manufacturing the substrate layer (110) described above.

In the above, all the components constituting the embodiment of the present disclosure have been described as being combined into one or operating in combination, but the technical spirit of the present disclosure is not necessarily limited to such embodiments. That is, within the scope and objective of the present disclosure, all the components may be selectively combined into one or more to operate.

Although the embodiments of the present disclosure have been described above with reference to the accompanying drawings, those skilled in the art will understand that the present disclosure can be implemented in other specific forms without changing the technical spirit or essential features. Therefore, the embodiments described above should be understood as illustrative and not restrictive in all respects. The scope of protection of the present disclosure should be interpreted according to the following claims, and all technical ideas within the equivalent scope thereof should be interpreted as being included within the scope of rights defined by the present disclosure.

## Claims

1. A functional cutting board comprising:
a substrate layer including TPU (thermoplastic polyurethane); and
a functional substance contained within the substrate layer,
wherein the functional substance includes a natural extract containing vitamins.

2. The functional cutting board of claim 1,
wherein the natural extract includes grapefruit seed extract and grapefruit peel extract.

3. The functional cutting board of claim 1,
wherein the substrate layer contains a plurality of capsules,
each of the plurality of capsules containing the grapefruit seed extract and the grapefruit peel extract,
the grapefruit seed extract consisting of vitamin C, naringin, hesperidin, and beta-carotene,
and the grapefruit peel extract consisting of naringin, apigenin, and pectin.

4. The functional cutting board of claim 3,
wherein each of the plurality of capsules has a core-shell structure,
the core-shell structure comprising a core containing the grapefruit seed extract and the grapefruit peel extract, and a shell containing a polymer resin,
wherein the weight ratio of the grapefruit seed extract to the grapefruit peel extract contained in the core is from 10:1 to 10:2.
